(19) Europäisches Patentamt
European Patent Office
Office européen des brevets

(11) EP 4 307 580 A1

(12) EUROPEAN PATENT APPLICATION

(43) Date of publication:
17.01.2024 Bulletin 2024/03

(21) Application number: 22184426.9

(22) Date of filing: 12.07.2022

(51) International Patent Classification (IPC):
H04B 10/70 (2013.01)    H04B 10/2513 (2013.01)
H04B 10/2569 (2013.01)

(52) Cooperative Patent Classification (CPC):
H04B 10/70; H04B 10/2513; H04B 10/2569

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Österreichische Akademie der
Wissenschaften
1010 Wien (AT)

(72) Inventor: Neumann, Sebastian Philipp
1090 Wien (AT)

(74) Representative: Louis Pöhlau Lohrentz
Patentanwälte
Postfach 30 55
90014 Nürnberg (DE)

(54) **METHOD AND SYSTEM FOR THE COMPENSATION OF POLARIZATION-MODE DISPERSION**

(57)    It is claimed a method for the compensation of polarization-mode dispersion for quantum communication, comprising the steps,
i) generation of photons in the source (1) and transmission of the photons to the one or more receivers (2);
ii) compensation of the chromatic dispersion by the chromatic dispersion compensation means (DCM) (4) by arranging the chromatic dispersion compensation means (DCM) (4) in the one or more quantum channels (3); According to the invention, the polarization-mode dispersion is compensated with the steps

iii) adjustment of the value of a polarization-mode dispersion compensation means (5);
iv) calibration of the orientation of the polarization-mode dispersion compensation means (5);
whereby for the steps iii) and/or iv) a local polarization reference frame is provided in at least two mutually unbiased polarization measurement bases, and the photons are detected at the one or more receivers (2) in the at least two mutually unbiased polarization measurement bases each.

Fig. 1

**Description**

The present invention provides a method for the compensation of polarization-mode dispersion for quantum communication according to the preamble of claim 1 and a system for the compensation of polarization-mode dispersion for quantum communication according to the preamble of claim 10.

Quantum communication, for example used for quantum key distribution (QKD), is using single photons or entangled photons for a secure and robust communication. The feature of quantum key distribution (QKD) is the generation of a key between two parties and the ability of the two parties to detect the presence of any third party trying to gain knowledge of the generated key. For quantum key distribution (QKD) usually single photons with a prepare-and-measure quantum key distribution (QKD) protocol or entangled photon pairs with an entanglement-based quantum key distribution (QKD) protocol are used.

The photons are sent in known systems via long-distance telecommunication fibers, enabling the implementation of quantum communication protocols on existing infrastructure. In-fiber communication allows the continuous establishment of quantum communication in an environment uninfluenced by weather, time of day, or urban light pollution. However, it requires compensation of several effects which can otherwise be detrimental to the fidelity of the transmitted quantum states. In known quantum communication systems only a few effects are compensated, for example the chromatic dispersion.

Chromatic dispersion in telecom fibers diffuses the temporal definiteness of photon detection. In order to enable high-rate quantum key distribution (QKD) with single photons or to identify coincidences using entangled photon pairs counteracting this decrease in temporal definiteness is of paramount importance. Known systems use chromatic dispersion compensation means (DCM) to compensate the chromatic dispersion in fibers. Such chromatic dispersion compensation means (DCM) increase the fidelity, but only to a certain limit due to the introduction of new effects by the chromatic dispersion compensation means (DCM) itself.

It is an object of the present invention to provide an even more precise and cost-efficient method and system for the alignment of a quantum communication system, preferably for a quantum key distribution (QKD) system.

According to the present invention, a method for the compensation of polarization-mode dispersion for quantum communication, preferably for quantum key distribution (QKD), is provided according to claim 1.

This object is achieved by a method for the compensation of polarization-mode dispersion for quantum communication, preferably for quantum key distribution (QKD), comprising a photon source, one or more receivers, a quantum channel connecting the source and the one or more receivers each, and a chromatic dispersion compensation means (DCM), comprising the steps,

i) generation of photons in the source and transmission of the photons to the one or more receivers;
ii) compensation of the chromatic dispersion by the chromatic dispersion compensation means (DCM) by arranging the chromatic dispersion compensation means (DCM) in the one or more quantum channels;

According to the invention, the polarization-mode dispersion is compensated with the steps

iii) adjustment of the value of a polarization-mode dispersion compensation means;
iv) calibration of the orientation of the polarization-mode dispersion compensation means;
whereby for the steps iii) and/or iv) a local polarization reference frame is set in at least two mutually unbiased polarization measurement bases, and for the steps iii) and/or iv) the photons are detected at the one or more receivers in the at least two mutually unbiased polarization measurement bases each.

According to the present invention, a system for the compensation of polarization-mode dispersion for quantum communication, preferably for quantum key distribution (QKD), is provided according to claim 10.

The object is further achieved by a system for the compensation of polarization-mode dispersion for quantum communication, preferably for quantum key distribution (QKD), comprising

a source generating photons, and
one or more receivers detecting the photons in at least two mutually unbiased polarization measurement bases each, and
a quantum channel connecting the source with the one or more receivers each, and
a chromatic dispersion compensation means (DCM) arranged in one or more quantum channels in order to compensate the chromatic dispersion of the one or more quantum channels.

According to the invention, the system comprises a polarization-mode dispersion compensation means in order to compensate the polarization-mode dispersion, preferably the polarization-mode dispersion introduced by the chromatic dispersion compensation means (DCM).

An advantage of the inventive method and system is, that the fidelity of the system for quantum communication is increased not only by the compensation of the chromatic dispersion, but also by the compensation of the polarization-mode dispersion. By the inventive method and system higher key generation rates for quantum key distribution (QKD) are possible by the higher fidelity of the system due to the compensation of the polarization-mode dispersion.

In a preferred embodiment, the source is a single photon source or a polarization entangled photon pair source, preferably the photons are single photons or polarization entangled photon pairs. In a preferred embodiment, in step i) single photons or polarization entangled photon pairs are generated.

In a preferred embodiment, the single photon source is an on-demand single photon source, preferably a quantum dot, or an attenuated laser, or an entangled photon pair source while using only the signal photon or the idler photon of each entangled photon pair.

In a preferred embodiment, the entangled photon source comprises a laser and a non-linear element in order to generate polarization entangled photon pairs. In a preferred embodiment, the non-linear element is a non-linear crystal or a non-linear waveguide.

In a preferred embodiment with the entangled photon source, the entangled photon source comprises in addition a separation means in order to separate the signal photon and the idler photon of each entangled photon pair to send the signal photon of each pair to the first receiver and the idler photon of each pair to the second receiver. In a preferred embodiment, the separation means is a chromatic separation means, preferably a dichroic mirror, or a wavelength division de-multiplexer, or a grating, or a polarizing beam splitter, or a polarization sensitive means.

In a preferred embodiment, the polarization entangled photon pairs are non-degenerated. Non-degenerated means, that the signal photon and the idler photon of each pair exhibit different wavelength.

In a preferred embodiment, the polarization entangled photon pairs are degenerated. Degenerated means, that the signal photon and the idler photon of each pair have the same wavelength.

In a preferred embodiment, the quantum channel is a fiber guiding the photons from the source to the receiver. In a preferred embodiment, the quantum channel comprises in addition to the fiber one or more free space sections.

In a preferred embodiment of the quantum channel as a fiber, the quantum channel comprises coupling means in order to enable to couple the photons into the quantum channel, preferably in or behind the source or behind the free space section, and in order to enable to couple the photons out of the quantum channel, preferably before or in the receiver or before the free space sections. In a preferred embodiment, the coupling means is a lens or a lens system and preferably an adjustable alignment means for the lens or the lens system.

In a preferred embodiment, the chromatic dispersion compensation means (DCM) is a chirped fiber Bragg grating. In a preferred embodiment, the chirped fiber Bragg grating is connected with the quantum channel via a circulator, preferably a fiber circulator.

In a preferred embodiment with single photons, in step ii), and/or step iii), and/or step iv) a common polarization reference frame between the source and the receiver is set, preferably by a polarization control means. In a preferred embodiment, the common polarization reference frame is set after the implementation of the compensation of the chromatic dispersion in step ii).

In a preferred embodiment with single photons, the common polarization reference frame is set before step iii) and/or step iv), preferably before each step iii) and/or each step iv) when the steps iii) and/or steps iv) are realized iteratively. The iterative realization applies when step iii) is repeated several times, or when step iv) is repeated several times, or when the steps iii) and steps iv) are repeated alternately several times.

In a preferred embodiment with polarization entangled photon pairs, in step ii), and/or step iii), and/or step iv) a common polarization reference frame between the source and a first receiver and between the source and a second receiver, or only between both receivers is set, preferably by a polarization control means. In a preferred embodiment, the common polarization reference frame is set after the implementation of the compensation of the chromatic dispersion in step ii).

In a preferred embodiment with polarization entangled photon pairs, the common polarization reference frame is set before step iii) and/or step iv), preferably before each step iii) and/or each step iv) when the steps iii) and/or steps iv) are realized iteratively. The iterative realization applies when step iii) is repeated several times, or when step iv) is repeated several times, or when the steps iii) and steps iv) are repeated alternately several times.

In order to set the common polarization reference frame, an unknown polarization-transformation introduced by the quantum channel has to be compensated by the polarization control means.

In a preferred embodiment, the polarization control means is a variable wave-plate, and/or a tilted wave-plate, and/or a Soleil-Babinet compensator, and/or a combination of at least a first quarter wave-plate and a half wave-plate and a second quarter-wave plate, and/or a fiber controller creating the behavior of at least a first quarter wave-plate and a half wave-plate and a second quarter-wave plate by at least a first and a second and a third spool of the fiber, and/or a rotatable fiber squeezer.

In a preferred embodiment, the polarization control means is arranged in the system in order to enable to set the common polarization reference frame between the source and the receiver or between two receivers, and/or the polarization control means is arranged in the source, preferably before the one or more quantum channels and/or behind the polarizing element and/or behind the entangled photon source, and/or

the polarization control means is arranged in the one or more receivers, preferably before the beam splitter and/or before the polarizing beam splitter, and/or the polarization control means is arranged in the one or more quantum channels, preferably before the chromatic dispersion compensation means and/or behind the polarization-mode dispersion compensa-

In a preferred embodiment, the polarization control means is manually aligned or automatically aligned.

In a preferred embodiment, the chromatic dispersion compensation means (DCM) is thermally isolated, and/or the quantum channel between the chromatic dispersion compensation means (DCM) and the polarization-mode dispersion compensation means is thermally isolated.

In a preferred embodiment with a source and one receiver, the chromatic dispersion compensation means (DCM) is arranged in the quantum channel between the source and the one receiver.

In a preferred embodiment with a source and two receivers and the use of polarization entangled photon pairs, the chromatic dispersion compensation means (DCM) is arranged in the quantum channel between the source and the first receiver, or in the quantum channel between the source and the second receiver, or in each quantum channel.

Polarization mode dispersion is a modal dispersion occurring in fibers where two different polarizations of light, which normally travel at the same speed of light in the fiber, travel at different speeds due to random imperfections and asymmetries inducing birefringence, causing spreading of optical pulses. Polarization mode dispersion can also occur due to optical elements arranged in the quantum channel. Polarization mode dispersion can destroy the coherence of the polarization entangled photon pair state if the photon's coherence length is smaller than the polarization mode dispersion induced delay between the axes of polarization propagation. A degradation of the coherence starts already at the same order of magnitude. In addition, polarization mode dispersion increases the uncertainty in the detection time leading to a lower key generation due to the necessity of lager detection time windows, or enables a third party to gain knowledge of the polarization out of the detection time. All of these effects have consequences for any quantum communication protocol by a lower key generation rate or higher quantum bit error rate.

In a preferred embodiment, in step iii) the polarization mode dispersion introduced by the chromatic dispersion compensation means and/or the quantum channel is compensated.

In a preferred embodiment, the polarization-mode dispersion compensation means is a birefringent element, preferably with a difference of the birefringence $\Delta n = n_e - n_o$ of the ordinary birefringence $n_o$ and the extraordinary birefringence $n_e$ of at least $\pm 0.1$. In a preferred embodiment, the polarization-mode dispersion compensation means is a calcite crystal or a barium borate crystal. In a preferred embodiment, the polarization-mode dispersion compensation means is a fiber squeezer.

In a preferred embodiment, the polarization-mode dispersion compensation means is a in fiber means, or a free space means. In a preferred embodiment of the polarization-mode dispersion compensation means as free space means, the photons are coupled out of the quantum channel in front of the polarization-mode dispersion compensation means and/or are coupled in the quantum channel behind the polarization-mode dispersion compensation means. The coupling in and/or out is realized by an optical means, preferably a lens or a lens system.

In a preferred embodiment, the value of the polarization-mode dispersion compensation means is proportional to the magnitude of the polarization mode dispersion of the polarization-mode dispersion compensation means. In a preferred embodiment, the value of the polarization-mode dispersion compensation means is the length of the birefringent element and/or the value of the polarization-mode dispersion compensation means is the stress of an optical fiber in the fiber squeezer.

In a preferred embodiment, the length of the birefringent element is determined by the optical path of the photon through the birefringent element.

In a preferred embodiment, the polarization-mode dispersion compensation means has a fixed length or a variable length. In a preferred embodiment, the polarization-mode dispersion compensation means consists of two parts, movable to each other in order to enable a variable length of the polarization-mode dispersion compensation means. The birefringent axes of the two parts are matched to each other. In a preferred embodiment, the two parts are prism-shaped or trapeze-shaped in order to form plane input and output surfaces and enable a variable length by shifting the two parts to each other.

In a preferred embodiment with a source and one receiver, the polarization-mode dispersion compensation means is arranged in the source, and/or in the receiver, and/or in the quantum channel between the source and the one receiver.

In a preferred embodiment with a source and two receivers, the polarization-mode dispersion compensation means is arranged in the source, and/or in the first and/or the second receiver, and/or in the quantum channel between the source and the first receiver, and/or in the quantum channel between the source and the second receiver, and/or in each quantum channel.

In a preferred embodiment, polarization entangled photon pairs or polarized photons in the at least two mutually unbiased polarization bases are provided in step iii) and/or iv) by the entangled photon source, or by the entangled photon source and an adjustable polarizing element, or by the single photon source and an adjustable polarizing element, or by multiple single photon sources with polarizing element each. In the embodiment with multiple single photon sources and the polarizing elements each, each polarizing element sets a polarization out of the at least two mutually unbiased polarization bases and optical components behind the polarizing elements are arranged in order to combine the single photon paths of the multiple single photon sources to one single photon path.

In a preferred embodiment in order to set the local polarization reference frame, polarization entangled photon pairs or polarized photons in the at least two mutually unbiased polarization measurement bases are provided by the entangled photon source, or by the entangled photon source and an adjustable polarizing element, or by the single photon source and an adjustable polarizing element.

Mutually unbiased polarization measurement bases means if a system is prepared in a state belonging to one of the bases, then all outcomes of the measurement with respect to the other basis are predicted to occur with equal probability. An example of two mutually unbiased polarization measurement bases are the H/V basis and the D/A basis. H means linear horizontal polarization, V means linear vertical polarization, D means linear diagonal polarization, A means linear antidiagonal polarization. As an example, by a rotatable polarizer the linear polarization can be generated by 0° as linear horizontal polarization, 90° linear vertical polarization, 45° linear diagonal polarization, and -45° linear antidiagonal polarization. Polarized photons in the at least two mutually unbiased polarization measurement bases have a polarization in one out of the at least two unbiased polarization measurement bases.

In a preferred embodiment, the adjustable polarizing element is a rotatable polarization element, preferably a rotatable polarizer, or a polarizing beam splitter in combination with a rotatable half-wave plate.

In a preferred embodiment, the adjustable polarizing element is arranged in the source, or between the source and the chromatic dispersion compensation means (DCM), or between the source and the polarization-mode dispersion compensation means. Essential is here, that the arrangement of the polarizing element enables to generate polarized photons, which are afterwards transmitted through the chromatic dispersion compensation means (DCM) and the polarization-mode dispersion compensation means and then detected at the receiver.

In a preferred embodiment, the adjustment in step iii) is realized by determining the polarization-mode dispersion, preferably by a measurement, and/or calculation of the value of the polarization-mode dispersion compensation means and/or a production of the corresponding polarization-mode dispersion compensation means, or

the adjustment in step iii) is realized by one or more adjustment steps by changing the value of the polarization-mode dispersion compensation means in order to maximize the correlations.

In a preferred embodiment, the calculation of the length I of the polarization-mode dispersion compensation means is calculated by

$$l = PMD * \frac{c}{\Delta n}$$

, with PMD as the magnitude of the polarization mode dispersion, c as the light speed in vacuum, and $\Delta n$ as the birefringence difference of the polarization-mode dispersion compensation means. In a preferred embodiment, the calculation of the length I of the polarization-mode dispersion compensation means in 2nd order is realized by the Sellmeier equation of the material.

In a preferred embodiment, the adjustment in step iii) is performed to determine the length which is necessary to compensate the polarization-mode dispersion. That means to determine the length of the polarization-mode dispersion compensation means such that its total birefringence causes a temporal delay between orthogonal polarization modes that is equal in magnitude to the polarization-mode dispersion delay in the chromatic dispersion compensation means and/or the quantum channel. This can be realized by the calculation and production or by the adjustment step varying the length.

In a preferred embodiment, the adjustment in step iii) is performed to determine the stress in the optical fiber which is necessary to compensate the polarization-mode dispersion with a fiber squeezer. That means to determine the stress of the polarization-mode dispersion compensation means such that its total birefringence causes a temporal delay between orthogonal polarization modes that is equal in magnitude to the polarization-mode dispersion delay in the chromatic dispersion compensation means and/or the quantum channel. This can be realized by the adjustment step varying the stress of the optical fiber.

In a preferred embodiment, the one or more adjustment steps in step iii) is first performed with photons polarized in the first basis of the mutually unbiased polarization measurement bases and the maximization of the correlation and then performed with photons polarized in the second basis of the mutually unbiased polarization measurement bases and the maximization of the correlation. In a preferred embodiment, the one or more adjustment steps in step iii) with the first and the second basis are performed iteratively, preferably in order to maximize the correlation in the first basis and the second basis.

In a preferred embodiment, the one or more adjustment steps in step iii) is performed with polarization-entangled photon pairs which are measured in a determinedly or randomly chosen basis out of the two mutually unbiased polarization measurement bases and the maximization of the correlation. As an example, the determined basis choice can be realized by a polarizing element and a detector. As an example, the random basis choice can be realized by a beam splitter and at least one polarizing element and a detector behind each output of the beam splitter for a measurement of the photons in the two mutually unbiased polarization measurement bases.

In a preferred embodiment, the calibration in step iv) is realized by one or more rotation steps of the polarization-mode dispersion compensation means in order to maximize correlations.

In a preferred embodiment, the calibration in step iv) is performed to determine the optical axis which is necessary to compensate the polarization-mode dispersion. The calibration in step iv) is realized to determine the optical axis of the polarization-mode dispersion compensation means such that its birefringence causes a temporal delay between orthogonal polarization modes that reduces or cancels the polarization-mode dispersion delay of the chromatic dispersion compensation means and/or the quantum channel. This can be realized by the calibration step rotating the optical axis of the polarization-mode dispersion compensation means.

In a preferred embodiment, the one or more calibration in step iv) is first performed with photons polarized in the first basis of the mutually unbiased polarization measurement bases and the maximization of the correlation and then performed with the second basis of the mutually unbiased polarization measurement bases and the maximization of the correlation. In a preferred embodiment, the one or more calibration in step iv) with the first and the second basis are performed iteratively, preferably in order to maximize the correlation in the first basis and the second basis.

In a preferred embodiment, the one or more adjustment steps in step iv) is performed with polarization-entangled photon pairs which are measured in a determinedly or randomly chosen basis out of the mutually unbiased polarization measurement basis and the maximization of the correlation. As an example, the determined basis choice can be realized by a polarizing element and a detector. As an example, the random basis choice can be realized by a beam splitter and at least one polarizing element and a detector behind each output of the beam splitter for a measurement of the photons in the two mutually unbiased polarization measurement bases.

In a preferred embodiment with entangled photon pairs and two receivers the correlations are determined by a signal photon and an idler photon of each pair measured in the same basis.

In a preferred embodiment, for the polarization-mode dispersion first step iii) followed by step iv) is realized, or first step iv) followed by step iii) is realized, or the steps iii) and iv) are realized iteratively.

In a preferred embodiment, the correlation is the fidelity F, or the visibility V, or coincidences CC of entangled photon pairs in at least two mutually unbiased polarization measurement bases, or the correlation is the contrast of generated polarized photons in at least two mutually unbiased polarization measurement bases to the measured polarization of the polarized photons in at least two mutually unbiased polarization measurement bases. The generated polarized photons are polarized single photons or photons of a polarized laser beam. By the maximization for example of the visibility V in a quantum key distribution (QKD) system the quantum bit error rate QBER is minimized, which can also be taken for the adjustment in step iii) and/or the calibration in step iv). Thus, the maximization of the visibility V leads to a minimization of the quantum bit error rate QBER.

Fidelity F describes the closeness of two quantum states, preferably polarized single photons or polarization entangled photon pairs.

In the case of polarization-entangled photon pairs, the coincidences CC are determined by the detection of the photons of each pair in the different polarization bases, for example $CC_{HH}$, $CC_{VV}$, $CC_{HV}$, $CC_{VH}$, $CC_{DD}$, $CC_{AA}$, $CC_{DA}$, $CC_{AD}$, whereby for example for $CC_{HV}$ the first polarization H describes the polarization measured at the first receiver and the second polarization V describes the polarization measured at the second receiver. The visibility V can be calculated for example by

$$V_{HV} = \frac{CC_{HH} + CC_{VV} - CC_{HV} - CC_{VH}}{CC_{HH} + CC_{VV} + CC_{HV} + CC_{VH}} \qquad \text{or}$$

$$V_{DA} = \frac{CC_{DD} + CC_{AA} - CC_{DA} - CC_{AD}}{CC_{DD} + CC_{AA} + CC_{DA} + CC_{AD}} .$$

In the case of polarized photons and one receiver, the coincidences CC are determined by the generation of the photons in the different polarization bases and the detection of the photon in the different polarization bases. For example, for $C_{HV}$ the first polarization H describes the polarization in which the photon is generated at the source and the second polarization V describes the polarization measured at the second receiver. The visibility V can be calculated for example by

$$V_{HV} = \frac{CC_{HH} + CC_{VV} - CC_{HV} - CC_{VH}}{CC_{HH} + CC_{VV} + CC_{HV} + CC_{VH}} \qquad \text{or}$$

$$V_{DA} = \frac{CC_{DD} + CC_{AA} - CC_{DA} - CC_{AD}}{CC_{DD} + CC_{AA} + CC_{DA} + CC_{AD}} .$$

In a preferred embodiment, the one or more receivers comprise a polarization measurement means, one or more detectors, and a receiver electronic.

In a preferred embodiment, the polarization measurement means is one or more rotatable polarizers, and/or two or more non-rotatable polarizers, and/or one or more polarizing beam splitters, and/or one or more adjustable wave plates and a polarizer.

In a preferred embodiment, the receiver comprises a beam splitter, a waveplate, two polarizing beam splitters and four detectors in order to measure the photons in two mutually unbiased polarization measurement bases.

In a preferred embodiment, the detectors are single photon detectors, preferably fiber-coupled superconducting nanowire detectors, and/or fiber-coupled avalanche photo-diodes, and/or free-space avalanche photo-diodes.

In a preferred embodiment, the receiver electronic detects the basis and the detection time of the photons, preferably in order to determine coincidences between the two receivers, or between the source and one receiver.

In a preferred embodiment, after the method for the compensation of polarization-mode dispersion for quantum communication, preferably for quantum key distribution (QKD), quantum communication is performed, preferably a key is generated by quantum key distribution (QKD).

In a preferred embodiment, the system for the compensation of polarization-mode dispersion is used for quantum communication, preferably for quantum key distribution (QKD).

The above and other aspects, features and advantages of the present invention will become more apparent from the following detailed description when taken in conjunction with the accompanying drawings.

Brief Description of the Drawings:

Fig. 1:     schematic diagram of the inventive system for the compensation of polarization-mode dispersion with one receiver;

Fig. 2:     schematic diagram of the inventive system for the compensation of polarization-mode dispersion with two receivers;

Fig. 3:     schematic diagram of a second example of the inventive system for the compensation of polarization-mode dispersion with two receivers;

Fig. 4:     schematic diagram of the inventive system for the compensation of polarization-mode dispersion with an entangled photon source and one receiver for the adjustment of the compensation of polarization-mode dispersion;

Fig. 5:     schematic diagram of the polarization-mode dispersion compensation means with two parts.

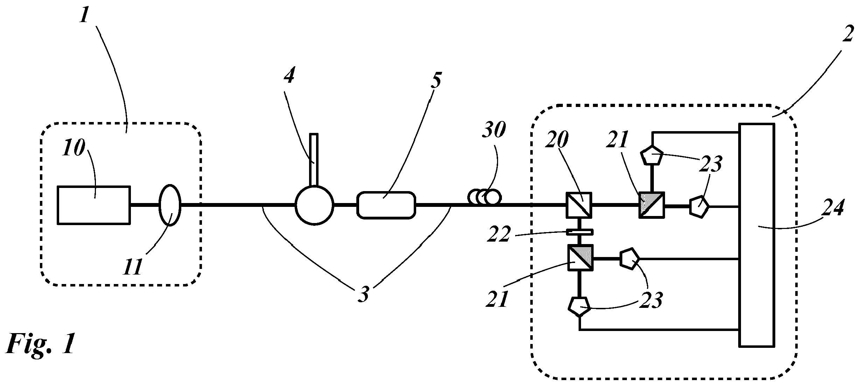

Fig. 1 shows a first example of the inventive system for the compensation of polarization-mode dispersion comprising a source 1 and a receiver 2 connected via a quantum channel 3.

The source 1 in the example of Fig. 1 comprises a laser 10 and a polarizing element 11. The laser 10 is attenuated in order to generate single photons. The rotatable polarizing element 11 is in the example of Fig. 1 a rotatable polarizer. By the laser 10 and the rotatable polarizing element 11 linear polarized single photons in two mutually unbiased polarization measurement bases are generated, for example the H/V basis with linear horizontal polarized photons H at 0° of the polarizer, and linear vertical polarization photons V at 90° of the polarizer, and the D/A basis with linear diagonal polarized photons D at 45° of the polarizer and linear antidiagonal polarization photons A at -45° of the polarizer. After the compensation steps, the source is capable to generate single photons in the two mutually unbiased polarization measurement bases for quantum communication, preferably for quantum key distribution (QKD).

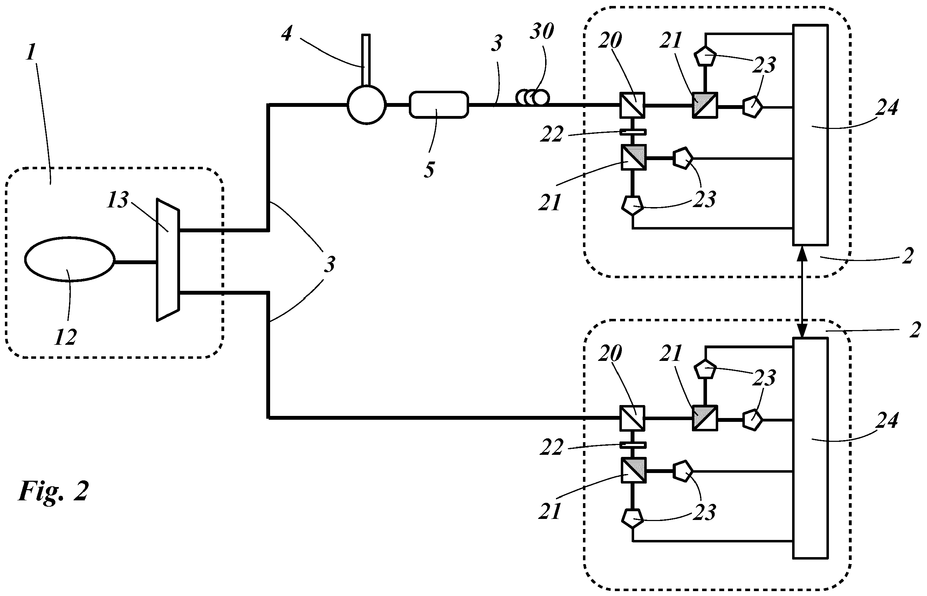

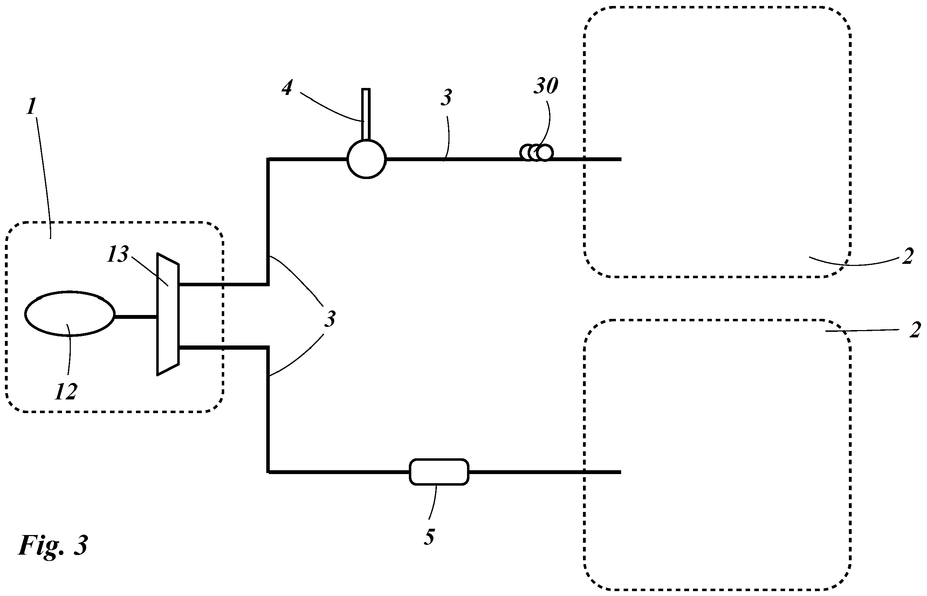

In the example of Fig. 1 the polarizer sets the two mutually unbiased polarization measurement bases H/V and D/A. In order to set the two mutually unbiased polarization measurement bases also at the receiver 2, a common polarization reference frame adjustment is realized by the source 1, the receiver 2 and a polarization control means 30 in order to compensate all unknown polarization-transformation introduced by the quantum channel 3 and all optical components in the quantum channel 3. The polarization control means 30 in the example of Fig. 1 is a fiber controller creating the behavior of a first quarter wave-plate, a half wave-plate, and a second quarter-wave plate by a first, second, and third spool of the fiber. In the example of Fig. 1 the polarization control means 30 is arranged in the quantum channel 3. The polarization control means 30 can be arranged at any other position in order to set the common polarization reference frame between the source 1 and the receiver 2, or for Fig. 2 and/or Fig. 3 between two receivers 2. The quantum channel 3 in this example is a fiber and a short free space part as explained below.

In the example of Fig. 1 the receiver 2 comprises a beam splitter 20, a waveplate 22, two polarizing beam splitters 21 and four detectors 23 as arranged in Fig. 1 in order to measure the photons in two mutually unbiased polarization measurement bases. The single photons are randomly reflected or transmitted by the beam splitter 20 in order to enable a random measurement in the H/V basis or in the D/A basis. Single photons in the H/V basis are measured by the upper polarizing beam splitter 21. The waveplate 22 is in the embodiment of Fig. 1 a half-wave plate at 22.5° in order to cause a polarization rotation of linear 45° which enables together with the lower polarizing beam splitter 21 a measurement of the single photons in the D/A basis. The receiver 2 comprises in addition an electronic 24 registering all single photon detections by the four detectors 23. In addition, the electronic receives the setting of the polarizing element 11 in order to calculate the contrast of generated polarized photons in at least two mutually unbiased polarization measurement bases to the measured polarization in the at least two mutually unbiased polarization measurement bases.

In the example of Fig. 1 the quantum channel 3 comprises in addition a chromatic dispersion compensation means 4 and a polarization-mode dispersion compensation means 5.

In the example of Fig. 1 the chromatic dispersion compensation means 4 is a fiber circulator whose first input/output is connected via the quantum channel 3 with the source 1, whose second input/output is connected with a fiber Bragg grating, and whose third input/output is connected via the quantum channel 3 with the receiver 2. The fiber Bragg grating introduces for example a polarization-mode dispersion of *PMD* = 1.8 *ps.*

The polarization-mode dispersion compensation means 5 in the example of Fig. 1 is arranged between the chromatic dispersion compensation means 4 and the receiver 2 in the quantum channel 3. In this example the polarization-mode dispersion compensation means 5 is a calcite crystal. For that the photons are coupled out of the fiber part of the quantum channel 3 in front of the polarization-mode dispersion compensation means 5 and are coupled back into the fiber part of the quantum channel 3 behind the polarization-mode dispersion compensation means 5. The free space part between the two couplers is also a part of the quantum channel 3. For the polarization-mode dispersion of *PMD* = 1.8 *ps* and the polarization-mode dispersion compensation means 5 made of calcite with a birefringence of Δ*n* = 0.163 at a wavelength of 1550 nm, the length *l* of the calcite crystal

$$ l = PMD * \frac{c}{\Delta n} = 3.3 \; mm $$

can be calculated by in order to compensate the polarization-mode dispersion introduced by the chromatic dispersion compensation means 4. In addition, the optical axis of the polarization-mode dispersion compensation means 5 is arranged such that its birefringence causes a temporal delay between orthogonal polarization modes that is opposite to the direction of the polarization-mode dispersion delay in the chromatic dispersion compensation means 4.

The inventive method for the compensation of polarization-mode dispersion of the example of Fig. 1 would proceed as follows:

For a quantum communication between the source 1 and the receiver 2 via the quantum channel 3 with the chromatic dispersion compensation means 4, first a common polarization reference frame is set between the source 1 and the receiver 2 by the polarization control means 30 to compensate all unknown polarization-transformations introduced by the quantum channel 3 and all optical components in the quantum channel 3.

In the next step (step iii)) in the example of Fig. 1, the adjustment of the value of the polarization-mode dispersion compensation means 5 is realized by the calculation of the length *l* of the polarization-mode dispersion compensation means 5 and a production of the corresponding polarization-mode dispersion compensation means 5 in order to compensate the polarization-mode dispersion *PMD* of the chromatic dispersion compensation means 4 as described above.

In the next step (step iv)), the calibration of the orientation of the polarization-mode dispersion compensation means 5 is realized by the transmission of single photons in one polarization, for example at first the horizontal linear polarized H, and the detection of the single photons at the receiver 2. By the detection of the single photons in both detectors 23 for the H/V basis the contrast can be calculated while rotating the polarization-mode dispersion compensation means 5. The polarization-mode dispersion compensation means 5 is rotated in order to maximize the contrast in the H/V basis. Then single photons in a second polarization in a second mutually unbiased polarization measurement basis to the H/V basis are generated, for example the diagonal linear polarization D of the D/A basis, and detected at the two detectors 23 of the D/A basis. The contrast is calculated while rotating the polarization-mode dispersion compensation means 5 in order to maximize the contrast. The calibration of the orientation of the polarization-mode dispersion compensation means 5 is carried out by maximization of the contrast iteratively in the H/V and the D/A bases. Before each calibration step, the common polarization reference frame is set between the source 1 and the receiver 2 by the polarization control means 30, that means before each calibration in the H/V bases of the iterative calibration, and before each calibration in the D/A bases of the iterative calibration.

Fig. 2 shows a second example of the inventive system for the compensation of polarization-mode dispersion comprising the source 1 and two receivers 2 connected via a quantum channel 3 each.

In the example of Fig. 2 the source 1 comprises an entangled photon source 12 generating polarization entangled photon pairs with a signal photon and an idler photon of each pair. The source 1 comprises in addition a wavelength de-multiplexer 13 in order to separate the signal photon and the idler photon of each pair. The signal photon is sent via the upper quantum channel 3 to the upper receiver 2 in Fig. 2. The idler photon is sent via the lower quantum channel 3 to the lower receiver 2 in Fig. 2.

Both receivers 2 in Fig. 2 comprise the beam splitter 20, the waveplate 22, two polarizing beam splitters 21 and four detectors 23 as arranged and shown in Fig. 2 in order to measure the photons in two mutually unbiased polarization measurement bases each. The signal or idler photons are randomly reflected or transmitted by the beam splitter 20 in order to enable a random measurement in the H/V basis or in the D/A basis at each receiver 2. The photons can be measured in the H/V basis by the upper polarizing beam splitter 21. The waveplate 22 is in this embodiment a half-wave plate at 22.5° in order to cause a polarization rotation of linear 45° which enables together with the lower polarizing beam splitter 21 a measurement of the photons in the D/A basis. Both receivers 2 comprise in addition an electronic 24 registering all photon detections by the four detectors 23 each. The two electronics 24 share the detection results and the timing of the detections in order to calculate the coincidences in the two mutually unbiased polarization measurement bases H/V and D/A or other values based on the coincidences. The entangled photon pairs are randomly directed to in the H/V or in the D/A basis measurement by the beam splitter 20 at each receiver 2. For example, by averaging the detection of the coincidences over a time interval, the visibility of both bases, H/V and D/A, can be monitored in this time interval.

In the example of Fig. 2 only in the upper quantum channel 3 the chromatic dispersion compensation means 4, the polarization-mode dispersion compensation means 5, and the polarization control means 30 are arranged. By the use of polarization entangled photon pairs, it is enough to arrange these optical components only in one quantum channel 3 in order to set a common polarization reference frame, in order to compensate the chromatic dispersion, and in order to compensate the polarization-mode dispersion for a communication between the two receivers 2, based on the polarization entangled photon pairs.

The inventive method for the compensation of polarization-mode dispersion of the example of Fig. 2 would proceed as follows:

For quantum communication between the two receivers 2 based on polarization entangled photon pairs first a common polarization reference frame is set between the two receivers 2 by the polarization control means 30 to compensate all unknown polarization-transformation introduced by both quantum channels 3 and all optical components in the quantum channels 3.

In the next step (step iii)) in the example of Fig. 2 the adjustment of the value of the polarization-mode dispersion compensation means 5 is realized by the calculation of the length *l* of the polarization-mode dispersion compensation means 5 and production of the corresponding polarization-mode dispersion compensation means 5 in order to compensate the polarization-mode dispersion of the chromatic dispersion compensation means 4 as described above.

In the next step (step iv)), the calibration of the orientation of the polarization-mode dispersion compensation means 5 is realized by the detection of the coincidences of the entangled photon pairs at both receivers 2 in the two mutually unbiased polarization measurement bases H/V and D/A and the calculation of the visibility out of the coincidences. The calibration is realized by the rotation of the polarization-mode dispersion compensation means 5 and the maximization of the visibility in both bases. The advantage of the use of entangled photon pairs is, that only in one optical channel 3 the polarization-mode dispersion compensation means 5 has to be arranged and by the setup of the receiver 2 as shown in Fig. 2 by averaging the coincidences over a time interval, the visibility of both bases, H/V and D/A, can be monitored in this time interval while the polarization-mode dispersion compensation means 5 is calibrated by the rotation. The arrow in Fig. 2 shows the communication between the electronic 24 of both receivers 2 in order to determine coincidences, that means the signal photon and the idler photon of each entangled photon pair.

Fig. 3 shows a third example of the inventive system for the compensation of polarization-mode dispersion which differs from the example of Fig. 2 only in that the polarization-mode dispersion compensation means 5 is arranged in the lower quantum channel 3. The inventive method for the compensation of polarization-mode dispersion of the example of Fig. 3 is realized in the same way as described for Fig. 2

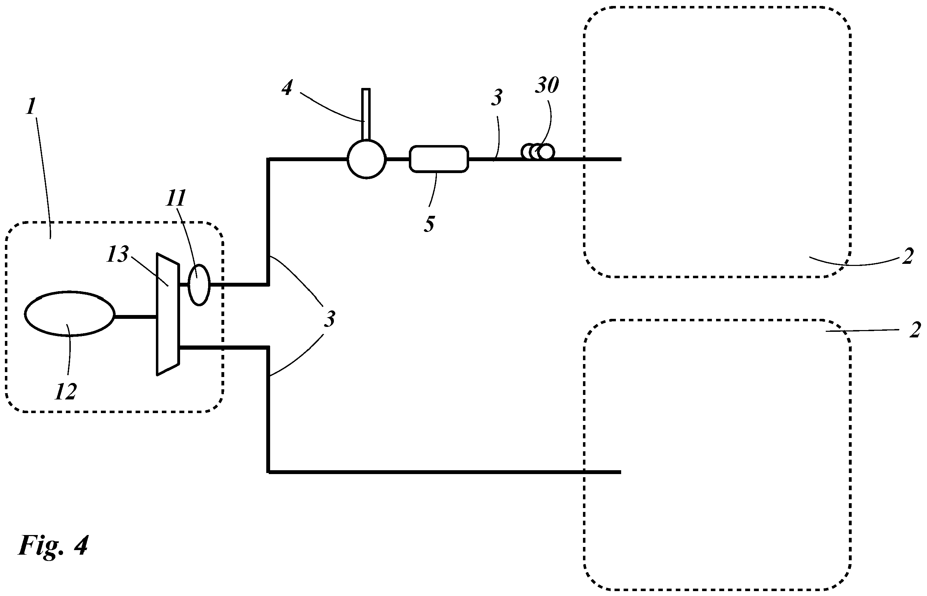

Fig. 4 shows a fourth example of the inventive system for the compensation of polarization-mode dispersion which differs from the example of Fig.1 only in that in the source 1 an entangled photon source 12 and a wavelength de-multiplexer 13 are arranged in order to generate single photons. Behind the entangled photon source 12 and a wavelength de-multiplexer 13 the rotatable polarizing element 11 is arranged for the generation of polarized single photons. In that example only the signal photons are used as single photons for the adjustment and calibration of the polarization-mode dispersion compensation means 5 as described for Fig. 1. In the example of Fig. 4 in order to set the local polarization reference frame and/or in order to adjust and/or calibrate the polarization-mode dispersion compensation means 5 a broad band laser can be used instead of the entangled photon source 12, whereby the broad band laser beam is filtered by the wavelength de-multiplexer 13 to the desired wavelength.

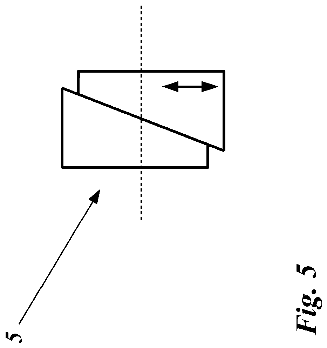

Fig. 5 shows an example of a polarization-mode dispersion compensation means 5 which consists of two parts, movable to each other as depicted in Fig. 5 by the arrows. Each part has a trapeze-shaped form in order to form a plane input and output surface and enable a variable length by shifting the two parts to each other and the birefringent axes of the two parts are matched to each other. By shifting the two parts to each other, the transmission length of the single photons, depicted by the dashed line in Fig. 5, can be changed to the necessary length in order to compensate the polarization-mode dispersion.

In order to realize the adjustment of step iii) and the calibration of step iv) with the polarization-mode dispersion compensation means 5 as shown in Fig. 5 the adjustment of the length and the calibration of the orientation of the polarization-mode dispersion compensation means 5 are realized iteratively for the steps iii) and iv) and in each step iteratively for the two mutually unbiased polarization measurement bases H/V and D/A.

Reference signs:

| | |
|---|---|
| 1 | source |
| 2 | receiver |
| 3 | quantum channel |
| 4 | chromatic dispersion compensation means |
| 5 | polarization-mode dispersion compensation means |
| 10 | laser |
| 11 | polarizing element |
| 12 | entangled photon source |
| 13 | wavelength de-multiplexer |
| 20 | beam splitter |
| 21 | polarizing beam splitter |
| 22 | wave plate |

23     detector
24     electronic

30     polarization control means

## Claims

1. Method for the compensation of polarization-mode dispersion for quantum communication, preferably for quantum key distribution (QKD), comprising a photon source (1), one or more receivers (2), a quantum channel (3) connecting the source (1) and the one or more receivers (2) each, and a chromatic dispersion compensation means (DCM) (4), comprising the steps,

   i) generation of photons in the source (1) and transmission of the photons to the one or more receivers (2);
   ii) compensation of the chromatic dispersion by the chromatic dispersion compensation means (DCM) (4) by arranging the chromatic dispersion compensation means (DCM) (4) in the one or more quantum channels (3); **characterized in that**
   the polarization-mode dispersion is compensated with the steps
   iii) adjustment of the value of a polarization-mode dispersion compensation means (5);
   iv) calibration of the orientation of the polarization-mode dispersion compensation means (5);
   whereby for the steps iii) and/or iv) a local polarization reference frame is set in at least two mutually unbiased polarization measurement bases, and for the steps iii) and/or iv) the photons are detected at the one or more receivers (2) in the at least two mutually unbiased polarization measurement bases each.

2. Method according to claim 1, **characterized in that**

   with single photons in step ii) a common polarization reference frame between the source (1) and the receiver (2) is set, preferably by a polarization control means (30), and/or
   with polarization entangled photon pairs, in step ii) a common polarization reference frame between the source (1) and a first receiver and between the source (1) and a second receiver (2), or only between both receivers (2) is set, preferably by a polarization control means (30).

3. Method according to one of the claims 1 or 2, **characterized in that**
   in step iii) the polarization mode dispersion introduced by the chromatic dispersion compensation means (4) and/or the quantum channel (3) is compensated.

4. Method according to one of the claims 1 to 3 **characterized in that**

   the value of the polarization-mode dispersion compensation means (5) is the length of a birefringent element, and/or
   the value of the polarization-mode dispersion compensation means (5) is the stress of an optical fiber in a fiber squeezer.

5. Method according to one of the claims 1 to 4, **characterized in that**

   the adjustment in step iii) is realized by determining the polarization-mode dispersion, preferably by a measurement, and calculation of the value of the polarization-mode dispersion compensation means (5), or
   the adjustment in step iii) is realized by one or more adjustment steps by changing the value of the polarization-mode dispersion compensation means (5) in order to maximize correlations.

6. Method according to one of the claims 1 to 5, **characterized in that**

   the one or more adjustment steps in step iii) is first performed with photons polarized in the first basis of the mutually unbiased polarization measurement bases and the maximization of the correlation and then performed with photons polarized in the second basis of the mutually unbiased polarization measurement bases and the maximization of the correlation, or
   the one or more adjustment steps in step iii) is performed with polarization entangled photon pairs determined or randomly measured in the first or second basis of the mutually unbiased polarization measurement bases and the maximization of the correlation, or
   the one or more adjustment steps in step iii) with the first and the second bases are performed iteratively, preferably in order to maximize the correlation in the first basis and the second basis.

7. Method according to one of the claims 1 to 6, **characterized in that**
   the calibration in step iv) is realized by one or more rotation steps of the polarization-mode dispersion compensation means (5) in order to maximize correlations.

8. Method according to one of the claims 1 to 7, **characterized in that**

the one or more calibration in step iv) is first performed with photons polarized in the first basis of the mutually unbiased polarization measurement bases and the maximization of the correlation and then performed with the second basis of the mutually unbiased polarization measurement bases and the maximization of the correlation, or

the one or more calibration in step iv) is performed with polarization entangled photon pairs determined or randomly measured in the first or second basis of the mutually unbiased polarization measurement bases and the maximization of the correlation, or

the one or more calibration in step iv) with the first and the second basis are performed iteratively, preferably in order to maximize the correlation in the first basis and the second basis.

9. Method according to one of the claims 1 to 8, **characterized in that**
for the polarization-mode dispersion first step iii) followed by step iv) is realized, or first step iv) followed by step iii) is realized, or the steps iii) and iv) are realized iteratively.

10. System for the compensation of polarization-mode dispersion for quantum communication, preferably for quantum key distribution (QKD), comprising a source (1) generating photons, and

one or more receivers (2) detecting the photons in at least two mutually unbiased polarization measurement bases each, and
a quantum channel (3) connecting the source (1) with the one or more receivers (2) each, and
a chromatic dispersion compensation means (DCM) (4) arranged in one or more quantum channels (3) in order to compensate the chromatic dispersion of the one or more quantum channels (3),
**characterized in that**
the system comprises a polarization-mode dispersion compensation means (5) in order to compensate the polarization-mode dispersion, preferably the polarization-mode dispersion introduced by the chromatic dispersion compensation means (DCM) (4).

11. System according to claim 10, **characterized in that**
the source (1) is a single photon source or a polarization entangled photon pair source.

12. System according to one of the claims 10 or 11, **characterized in that**

the polarization-mode dispersion compensation means (5) is a birefringent element, preferably with a difference of the birefringence $\Delta n = n_e - n_o$ of the ordinary birefringence $n_o$ and the extraordinary birefringence $n_e$ with at least $\pm 0.1$, and/or
the polarization-mode dispersion compensation means (5) is a fiber squeezer.

13. System according to one of the claims 10 to 12, **characterized in that**
the polarization-mode dispersion compensation means (5) has a fixed length or a variable length, preferably the polarization-mode dispersion compensation means (5) consists of two parts, movable to each other in order to enable a variable length of the polarization-mode dispersion compensation means (5).

14. System according to one of the claims 10 to 13, **characterized in that**

with a source (1) and one receiver (2), the polarization-mode dispersion compensation means (5) is arranged in the source (1), and/or in the receiver (2), and/or in the quantum channel (3) between the source (1) and the one receiver (2), or
with a source (1) and two receivers (2), the polarization-mode dispersion compensation means (5) is arranged in the source (1), and/or in the first and/or the second receiver (2), and/or in the quantum channel (3) between the source (1) and the first receiver (2), and/or in the quantum channel (3) between the source (1) and the second receiver (2), and/or in each quantum channel (3).

15. System according to one of the claims 10 to 14, **characterized in that**
the one or more receivers (2) comprise a polarization measurement means, one or more detectors (23), and a receiver electronic (24).

*Fig. 1*

Fig. 2

EP 4 307 580 A1

Fig. 3

*Fig. 4*

*Fig. 5*

Europäisches
Patentamt

European
Patent Office

Office européen
des brevets

# EUROPEAN SEARCH REPORT

Application Number

EP 22 18 4426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEBASTIAN PHILIPP NEUMANN ET AL: "Continuous entanglement distribution over a transnational 248 km fibre link", ARXIV.ORG, CORNELL UNIVERSITY LIBRARY, 201 OLIN LIBRARY CORNELL UNIVERSITY ITHACA, NY 14853, 23 March 2022 (2022-03-23), XP091183543, * figure 1 * * page 3 - page 7 * * Sections: "Sender and receiver infrastructure", "Nonlocal dispersion compensation", "Active polarization stabilization" * | 1-15 | INV. H04B10/70 H04B10/2513 H04B10/2569 |
| A | YICHENG SHI ET AL: "Fibre polarization state compensation in entanglement-based quantum key distribution", ARXIV.ORG, CORNELL UNIVERSITY LIBRARY, 201 OLIN LIBRARY CORNELL UNIVERSITY ITHACA, NY 14853, 16 July 2021 (2021-07-16), XP091012366, * the whole document * | 1-15 | |
| A | OLEG I BANNIK ET AL: "Noise-immunity Kazan quantum line at 143 km regular fiber link", ARXIV.ORG, CORNELL UNIVERSITY LIBRARY, 201 OLIN LIBRARY CORNELL UNIVERSITY ITHACA, NY 14853, 22 October 2019 (2019-10-22), XP081519138, * the whole document * | 1-15 | |

TECHNICAL FIELDS
SEARCHED      (IPC)

H04B

-/--

The present search report has been drawn up for all claims

| Place of search | Date of completion of the search | Examiner |
|---|---|---|
| Munich | 28 December 2022 | Lobato Polo, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 18 4426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUANG YETIAN ET AL: "Two-Level Optical Encryption for Secure Optical Communication", 2020 OPTICAL FIBER COMMUNICATIONS CONFERENCE AND EXHIBITION (OFC), OSA, 8 March 2020 (2020-03-08), pages 1-3, XP033767531, DOI: 10.1364/OFC.2020.M4A.2 [retrieved on 2020-04-30] * the whole document * | 1-15 | |
| A | US 2010/309469 A1 (KANTER GREGORY S [US] ET AL) 9 December 2010 (2010-12-09) * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 28 December 2022 | Lobato Polo, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 4426

This annex lists the patent family members relating to the patent documents cited in the above-mentioned European search report.
The members are as contained in the European Patent Office EDP file on
The European Patent Office is in no way liable for these particulars which are merely given for the purpose of information.

28-12-2022

| Patent document cited in search report | Publication date | Patent family member(s) | Publication date |
|---|---|---|---|
| US 2010309469 A1 | 09-12-2010 | NONE | |